(19) Europäisches Patentamt / European Patent Office / Office européen des brevets

(11) **EP 2 410 744 A1**

(12) **EUROPEAN PATENT APPLICATION**

(43) Date of publication:
**25.01.2012 Bulletin 2012/04**

(51) Int Cl.:
**H04N 7/24** *(2011.01)*

(21) Application number: **10305817.8**

(22) Date of filing: **23.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Alcatel Lucent
75007 Paris (FR)**

(72) Inventors:
- **de Vleeschauer, Bart
9200, Dendermonde (BE)**
- **Huysegems, Rafaël
2800, Walem (Mechelen) (BE)**

- **Custers, Stefan
2260, Westerlo (BE)**
- **van Leekwijck, Werner
2610, Antwerpen (BE)**

(74) Representative: **ALU Antw Patent Attorneys
Intellectual Property and Standards
Copernicuslaan 50
2018 Antwerp (BE)**

Remarks:
Amended claims in accordance with Rule 137(2)
EPC.

(54) **Method for transferring video segments, client entity and proxy entity realizing such a method**

(57) Method for providing video segments to a client entity (C) from a proxy entity (P), using a request-response protocol, each video segment being available at a server entity as a plurality of encoded video segments encoded according to respective quality levels. The method includes the steps of :
- the client entity (C) selecting one quality level of the respective quality levels,
- the client entity (C) sending out information related to that one quality level and a request to transfer to it encoded segments encoded in accordance with that information,
- the proxy entity (P) receiving the information related to the one quality level and the request to transfer to it encoded segments encoded in accordance with that information and determining an alternative quality level based on the one segment quality and on local criteria such as, but not limited to the quality level according to which encoded segments stored by the proxy entity (P) are encoded or to a transfer time needed to transfer video segments from the proxy entity (P) to the client entity (C) or to profile information of the client entity (C) or any combination thereof,
- and the proxy entity sending alternative encoded segments encoded according to an encoding quality level related to the alternative quality level to the client entity.

Fig.

## Description

The invention relates to a method for providing video segments to a client entity from a proxy entity, using a request-response protocol, each video segment being available at a server entity as a plurality of encoded video segments encoded according to respective quality levels said method including the steps of :

- said client entity selecting one quality level of said respective quality levels, and
- said client entity sending out information related to said one quality level and a request to transfer to it encoded segments encoded in accordance with said information.

For efficient delivery of video files over the Internet, real-time protocols such as RTP (Real-time Transport Protocol) and UDP (User Diagram Protocol) have been developed. Due to the availability of Content Delivery Networks (CDNs) with HTTP caching nodes for popular web pages, the familiarity of webpage developers with HTTP technology, and the more easy firewall traversal of HTTP/TCP since firewalls are configured to pass websites that are accessed through the web browser, there is a tendency to use non real-time protocols such as HTTP/TCP increasingly for delivery of video files over the Internet. There exist different categories of solutions for delivering video files over the Internet via non real-time protocols such as HTTP/TCP. One of them is adaptive streaming. HTTP adaptive streaming (HAS), known for instance from the "HTTP-Based Adapting Streaming" part of the "IIS Smooth Streaming Technical Overview" by Alex Zambelli (Microsoft Silverlight).

HAS relies on the availability at a server or at an intermediate or caching element of video files in different qualities and segmented time slots of for instance 2 seconds duration.

Time segments of different qualities can be combined when viewing the video. HTTP adaptive streaming enables the client entity to view the video in the highest quality estimated possible, and to request lower quality segments when the available bandwidth in the network is insufficient, or at start-up of a new video in order to enable quick start through downloading initial segments of lower quality. Typically, the client entity shall try to keep its buffer filled to a certain level, e.g. 20 to 30 seconds playback time. When the buffer depletes, the client starts requesting lower quality segments of the video file in order to fill up the buffer more quickly and avoid freezing of the video.

The sending of the segments can be done by an intermediate network element, here a multimedia proxy, that caches these segments. Such a proxy caching mechanism for adaptive streaming is for instance described in the article "Multimedia Proxy Caching Mechanism for Quality Adaptive Streaming Applications in the Internet" by Reza Rejaie, Haobo Yu, Mark Handley and Deborah Estrin. The article describes some algorithms based on which the caching is decided.

When performing segment based delivery with multiple qualities where the client requests a given quality, the requested version may not be present in the proxy element, whereas another quality version (either higher or lower) is. In this case, the proxy element requests the originally requested version from the source server, even though it could have offered a version that is slightly higher/lower. In addition, the client entity requests a specific segment version based on its view of the network situation to the server such as the load on that network, the reliability of that network a.s.o.. The proxy could however have more or better information on that network situation and it also has information on the connectivity between itself and the client that is not taken into account in the request from the client.

As a result, there may be a mismatch between what the client requests and what is actually a more optimal quality available either in the proxy element or with the server.

It is an object of the invention to overcome the above shortcomings of the known methods.

The method according to the invention realizes this object in that it also includes the steps of

- said proxy entity receiving said information related to said one quality level and said request to transfer to it encoded segments encoded in accordance with said information and determining an alternative quality level based on said one segment quality and on local criteria such as, but not limited to the quality level according to which encoded segments stored by said proxy entity are encoded or to a transfer time needed to transfer video segments from said proxy entity to said client entity or to profile information of said client entity or any combination thereof, and
- said proxy entity sending alternative encoded segments encoded according to an encoding quality level related to said alternative quality level to said client entity.

In this way video segments encoded in a more optimal quality different from the one chosen by the client entity are provided to that client entity.

An additional feature of an embodiment according to the invention is that said method additionally includes the steps of said proxy entity sending to said client entity information on a rationale for determining said alternative quality level and said client entity sending a subsequent request to transfer to it video segments encoded according to said encoding quality level, said encoding quality level being determined by said client entity based on said information on said rationale, said steps of said proxy entity sending said rationale and of said client entity sending said subsequent request being performed before said step of sending alternative encoded video segments by said proxy entity.

In this way instead of immediately sending video segment encoded according to the encoded quality level the proxy element first informs the client entity of reasons for possibly choosing an alternative quality and the client entity can based thereon decide to ask for segments encoded with the encoded quality derived from the information on the rationale for choosing an alternative quality level as provided by the proxy.

An additional feature of an embodiment of the method according to the invention is that said proxy entity in addition sends to said client entity information on a rationale for determining said alternative quality level.

In this way the client entity is informed about the reason for which the proxy element sent out video segments encoded using an alternative quality and can possibly take this into account in its request for further encoded video segment. Another additional feature of an embodiment of the method according to the invention is that said information related to said one segment level quality contains a quality range.

In this way the the client entity informs the proxy entity about the boundaries within which an alternative quality can be defined.

The invention also relates to a proxy entity and to a client entity realizing the method according to the invention.

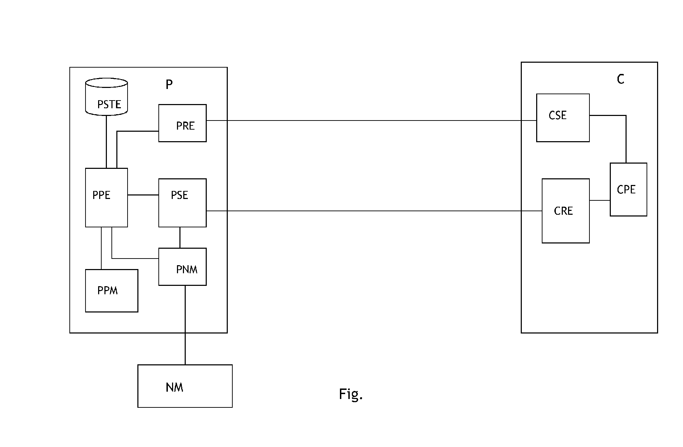

Embodiments of a proxy entity and of a client entity realizing the present invention and the method according to the invention are hereafter described, by way of example only, and with reference to the accompanying figure Fig. that represents a network where a proxy entity P communicates with a client entity C, such as a set-top box, a laptop or a mobile terminal, via the Web. P also communicates with a Network management module NM. For the sake of clarity the web connections between P, NM and C are represented by single lines.

P contains a storage entity PSTE, a receiving entity PRE, a sending entity PSE, a processing entity PPE, a proxy network manager PNM and a profile manager PPM. C contains a receiving part CRE, a sending part CSE and a processing part CPE.

P uses the Hypertext Transfer Protocol (HTTP) on top of the Transmission Control Protocol/Internet Protocol (*TCP*/IP) to provide video streams to C. It functions as a caching entity for a server (not shown) where encoded video segments are stored. These video segments are typically 2 to 4 seconds long and they are encoded using the desired delivery code format. How this is done is not described in detail as it is not the subject of this invention. The coding can be done by the server or by an external encoder.

The segments are delivered by means of adaptive streaming. To this end each video segment is encoded into several encoded video segments using different bit rates corresponding to different quality levels. To reduce the delivery delay and save network bandwidth, part of the encoded segments is cached in P. On what basis, and how this is done is not described here since it is not part of the subject invention. The earlier mentioned article descibes one way of realizing such caching.

In order to have video segments sent to it, C, or more specifically CSE in C, in a first instance sends a request to the server to get information on the available quality levels. This is the so called manifest request message.

C receives the reply of this manifest request message with information on the available encoding qualities via CSE and passes it on to CPE. CPE uses locally available information on the size of its local buffers (not shown in the figure) that are used to buffer the segments before displaying them to a user (also not shown) and on an evaluation of the available bandwidth to transfer encoded segments to calculate the highest quality level that can be achieved for the transfer and that would result in a good buffer filling. A predefined algorithm is used to make this calculation and information on this calculated quality level is inserted in a segment request message that is forwarded to CRE for transfer to the server via P, in order to obtain video segments with the requested quality level. It has to be remarked that this request can equally well be sent to the server directly and be forwarded to P by the server. Algorithms to make the above calculation are well known in the art and are therefore not described here in detail. An example of such an algorithm was distributed with the Microsoft Expression Encoder 2 Service Pack 1 and was implemented in C#.

The segment request message is received by PRE and forwarded to PPE. PPE checks if PSTE stores encoded segments for the segment with the requested quality. If not then the request is forwarded to the server. If it stores such encoded segments, then PPE determines if the quality according to which the stored segments are encoded is not more optimal than the one requested by C. To do so, PPE uses information from PPM and PNM. PPM stores information on the profile of C such as the bandwidth available to C based on its subscription. PNM interacts with a network manager NM to obtain a view on the overall network load. From the thus obtained information PPE computes a more optimal quality level and checks if the segment encoded according to this more optimal quality level is stored by PSTE. If so, then it sends this encoded segment to CRE via PSE. If no such encoded segment can be found, then the request is forwarded to the server.

In an alternative embodiment PPE also uses an estimate of the buffer filling level of C to determine the more optimal quality level.

In another alternative embodiment, if a segment encoded to the more optimal quality level is not available at the proxy, then the latter sends to the client entity the highest stored quality version that meets the available bandwidth, is higher than the requested version and is lower than a configured profile bandwidth for the client.

Following formulas are used to determine this more optimal quality level Q(s) for a segment s :

$$Cand(s) = \{x \mid x \in Sto(s) \wedge Rate(x) \leq BW(p,c) \wedge Rate(x) \geq \operatorname{Re}q(s) \wedge Rate(x) \leq Pol(c)\}$$

$$Q(s) = \{x \mid x \in Cand(s) \wedge \forall y \in Cand(s) : Rate(y) \leq Rate(x)\}$$

Where Sto(s) is the set of stored versions for segment s,
Rate (x) is the bandwidth corresponding to a segment x,
BW(p,c) is the available bandwidth between P and C
Req(s) is the bit rate that was requested by C
Pol(c) is the max bit rate that is specified in the profile for C

In an alternative embodiment PPE sends information on the rationale behind selecting the alternative quality level to C together with the encoded segment. This information can then be taken into account by CPE in further determination of the requested quality level.

Such information is, for instance :

- LOWER, NEAR-CONGESTION: a lower quality segment was delivered because the network is near congestion, or
- LOWER, NOT_ALLOWED: a lower quality segment was delivered because the user has not got the required subscription, or
- HIGHER, IN_CACHE: a higher quality segment was delivered because this was stored in the cache.

In another alternative embodiment PPE does not send a segment encoded according to a more optimal quality level, but it only sends information on the rationale for possibly choosing another quality level. Based on this information C can then decide on whether or not ask for another quality level.

In still another alternative embodiment C sends a range of quality levels in its request for encoded segments and this range is taken into account by P when determining a possible alternative quality level.

How the video segments are decoded and how they are streamed to the user is not described herein since this is not the subject of the invention.

Also, the implementation of the functional blocks in P and C is not described in details as this implementation should be quite straightforward for a person skilled in the art based on the above functional descriptions.

In addition it should be noted that the described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

The above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions and all statements herein reciting principles, aspects, and embodiments of the invention, as well as specific example thereof, are intended to encompass equivalents thereof. For instance the proxy element can equally well be an origin server, meaning that encoded segments encoded according to all possible qualities are available and that the choice of an alternative video segment will be based only on the other criteria such as available bandwidth and user profile.

**Claims**

**1.** Method for providing video segments to a client entity (C) from a proxy entity (P), using a request-response protocol, each video segment being available at a server entity as a plurality of encoded video segments encoded according to respective quality levels said method including the steps of :

- said client entity (C) selecting one quality level of said respective quality levels,
- said client entity (C) sending out information related to said one quality level and a request to transfer to it encoded segments encoded in accordance with said information,

**characterized in that** said method also includes the steps of

- said proxy entity (P) receiving said information related to said one quality level and said request to transfer to it encoded segments encoded in accordance with said information and determining an alternative quality level based on said one segment quality and on local criteria such as, but not limited to the quality level according to which encoded segments stored by said proxy entity (P) are encoded or to a transfer time needed to transfer video segments from said proxy entity (P) to said client entity (C) or to profile information of said client entity (C) or any combination thereof,
- and said proxy entity sending alternative encoded segments encoded according to an encoding quality level related to said alternative quality level to said client entity.

2. Method according to claim 1, **characterized in that** it additionally includes the steps of

- said proxy entity (P) sending to said client entity (C) information on a rationale for determining said alternative quality level and said client entity (C) sending a subsequent request to transfer to it video segments encoded according to said encoding quality level, said encoding quality level being determined by said client entity (C) based on said information on said rationale,
- said steps of said proxy entity (P) sending said rationale and of said client entity (C) sending said subsequent request being performed before said step of sending alternative encoded video segments by said proxy entity (P).

3. Method according to claim 1, **characterized in that** said proxy entity (P) in addition sends to said client entity (C) information on a rationale for determining said alternative quality level.

4. Method according to claim 1, **characterized in that** said information related to said one segment level quality contains a quality range.

5. Method according to claim 1, **characterized in that** said encoding quality level equals said alternative quality level.

6. Client entity (C) for realizing a method according to claim 1, said client entity (C) including a selection entity (CPE) adapted to make a selection of one segment quality level of a plurality of possible quality levels, a sending entity (CSE) adapted to send entity information related to said one segment quality level and to request to transfer to it encoded segments encoded in accordance with said information **characterized in that** said client entity (C) also includes a receiving entity (CRE) adapted to receive in response to said request alternative encoded video segments encoded according to an encoding quality level that differs from said one segment quality level.

7. Client entity (C) according to claim 6, **characterized in that** said receiving entity (CRE) is further adapted to receive information on a rationale for determining an alternative quality level differing from said one segment quality level, said selection entity (CPE) being further adapted to determine from said information on said rationale an encoding quality level and said sending entity (CRE) being further adapted to send out a request for encoded video segments encoded in accordance with said encoding quality level.

8. Client entity (C) according to claim 6, **characterized in that** said information related to said one segment level quality contains a quality range.

9. Proxy entity (P) for realizing a method according to claim 1, said proxy entity (P) including a storage part (PSTE) adapted to store encoded video segments encoded according to respective quality levels, a receiving part (PRE) adapted to receive entity information related to one segment quality level and a request to transfer to a client entity (C) encoded segments encoded in accordance with said information, **characterized in that** said proxy entity (P) also includes a processing unit (PPE) adapted to determine an alternative segment quality level based on said information related to said one segment quality and on local criteria such as, but not limited to the quality level according to which encoded segments stored by said storing part (PSTE) are encoded or to a transfer time needed to transfer video segments from said proxy entity (P) to said client entity (C) or to profile information of said client entity (C) or any combination thereof, and a sending part (PSE) adapted to send to said client entity (C) alternative encoded segments encoded according to an encoding quality related to said alternative quality level.

10. Proxy entity (P) according to claim 9, **characterized in that** said processing unit (PPE) is also adapted to generate information on a rationale for determining said alternative quality level and that said sending part (PSE) is adapted to send said information on said rationale to said client entity (C).

11. Proxy entity (P) according to claim 9, **characterized in that** said encoding quality level equals said alternative quality level.

12. Proxy entity (P) according to claim 10, **characterized in that** said information related to said one segment level quality contains a quality range.

**Amended claims in accordance with Rule 137(2) EPC.**

1. Method for providing video segments to a client entity (C) from a proxy entity (P), using a request-response protocol, each video segment being available at a server entity as a plurality of encoded video segments encoded according to respective quality levels said method including the steps of :

- said client entity (C) selecting one quality level of said respective quality levels,
- said client entity (C) sending out information related to said one quality level and a request to transfer to it encoded segments encoded in accordance with said information,

**characterized in that** said method also includes the steps of

- said proxy entity (P) receiving said information related to said one quality level and said request to transfer to it encoded segments encoded in accordance with said information and determining an alternative quality level based on said one segment quality and on locally available information on the quality level according to which encoded segments stored by said proxy entity (P) are encoded or a transfer time needed to transfer video segments from said proxy entity (P) to said client entity (C) or, profile information of said client entity (C) or any combination thereof,
- said proxy entity (P) sending to said client entity (C) information on a rationale for determining said alternative quality level and said client entity (C) sending a subsequent request to transfer to it video segments encoded according to said encoding quality level, said encoding quality level being determined by said client entity (C) based on said information on said rationale.

2. Method according to claim 1 **characterized in that** said proxy entity (P) sends at least one encoded segment encoded in accordance with said alternative quality level to said client entity (C) before said client entity sends said subsequent request to said proxy entity.

3. Client entity (C) for realizing a method according to claim 1, said client entity (C) including a selection entity (CPE) adapted to make a selection of one segment quality level of a plurality of possible quality levels, a sending entity (CSE) adapted to send entity information related to said one segment quality level and to request to transfer to it encoded segments encoded in accordance with said information **characterized in that** said client entity (C) also includes a receiving entity (CRE) adapted to receive in response to said request alternative encoded video segments encoded according to an encoding quality level that differs from said one segment quality level.

4. Client entity (C) according to claim 1, **characterized in that** said receiving entity (CRE) is further adapted to receive information on a rationale for determining an alternative quality level differing from said one segment quality level, said selection entity (CPE) being further adapted to determine from said information on said rationale an encoding quality level and said sending entity (CRE) being further adapted to send out a request for encoded video segments encoded in accordance with said encoding quality level.

5. Proxy entity (P) for realizing a method according to claim 1, said proxy entity (P) including a storage part (PSTE) adapted to store encoded video segments encoded according to respective quality levels, a receiving part (PRE) adapted to receive entity information related to one segment quality level and a request to transfer to a client entity (C) encoded segments encoded in accordance with said information, **characterized in that** said proxy entity (P) also includes a processing unit (PPE) adapted to determine an alternative segment quality level based on said information related to said one segment quality and on locally available information on the quality level according to which encoded segments stored by said storing part (PSTE) are encoded or to a transfer time needed to transfer video segments from said proxy entity (P) to said client entity (C) or to profile information of said client entity (C) or any combination thereof, and a sending part (PSE) adapted to send to said client entity (C) alternative encoded segments encoded according to an encoding quality related to said alternative quality level.

**6.** Proxy entity (P) for realizing a method according to claim 1, said proxy entity (P) including a storage part (PSTE) adapted to store encoded video segments encoded according to respective quality levels, a receiving part (PRE) adapted to receive entity information related to one segment quality level and a request to transfer to a client entity (C) encoded segments encoded in accordance with said information, **characterized in that** said proxy entity (P) also includes a processing unit (PPE) adapted to determine an alternative segment quality level based on said information related to said one segment quality and on locally available information on the quality level according to which encoded segments stored by said storing part (PSTE) are encoded or to a transfer time needed to transfer video segments from said proxy entity (P) to said client entity (C) or to profile information of said client entity (C) or any combination thereof, and a sending part (PSE) adapted to send to said client entity (C) a rationale for determining said alternative quality.

Fig.

**European Patent Office**

Europäisches Patentamt
European Patent Office
Office européen des brevets

## EUROPEAN SEARCH REPORT

Application Number

EP 10 30 5817

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HO K M ET AL: "Investigating the Performance of Hierarchical Video-on-Demand System in Heterogeneous Environment" INTERNATIONAL CONFERENCE ON INFORMATION NETWORKING. ICOIN 2008, 23 January 2008 (2008-01-23), pages 1-5, XP031238839 IEEE, PISCATAWAY, NJ, USA ISBN: 978-89-960761-1-7 | 1-3,5-7, 9-11 | INV. H04N7/24 |
| Y | * abstract * * page 2, left-hand column, line 3 - line 19 * * page 3, left-hand column, line 5 - line 19 * * page 4, left-hand column, line 12 - line 22 * | 4,8,12 | |
| Y | XIAORONG LI ET AL: "Design of an SLA-Driven QoS Management Platform for Provisioning Multimedia Personalized Services" 22ND INTERNATIONAL CONFERENCE ON ADVANCED INFORMATION NETWORKING AND APPLICATIONS - WORKSHOPS. AINAW 2008, 25 March 2008 (2008-03-25), pages 1405-1409, XP031241012 IEEE, PISCATAWAY, NJ, USA ISBN: 978-0-7695-3096-3 * abstract * section III | 4,8,12 | TECHNICAL FIELDS SEARCHED (IPC) H04N |

-/--

The present search report has been drawn up for all claims

| Place of search | Date of completion of the search | Examiner |
|---|---|---|
| Berlin | 10 February 2011 | Kontopodis, D |

EPO FORM 1503 03.82 (P04C01)

Europäisches
Patentamt

European
Patent Office

Office européen
des brevets

**EUROPEAN SEARCH REPORT**

Application Number

EP 10 30 5817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANGASHARJU J; HARTANTO F; REISSLEIN M; ROSS K W;: "Distributing layered encoded video through caches" IEEE TRANSACTIONS ON COMPUTERS, vol. 51, no. 6, June 2002 (2002-06), pages 622-636, XP002621541 ISSN: 0018-9340 DOI: 10.1109/TC.2002.1009148 * abstract * section 2.2, paragraph 1 section 2.3, paragraph 1 section 4 ----- | 1-12 | |
| A,D | ALEX ZAMBELLI: "IIS Smooth Streaming Technical Overview"[Online] 23 March 2009 (2009-03-23), pages 1-17, XP002617719 Microsoft Retrieved from the Internet: URL:http://www.microsoft.com/downloads/en/details.aspx?displaylang=en&FamilyID=03d22583-3ed6-44da-8464-b1b4b5ca7520> [retrieved on 2011-01-24] * page 7, line 6 - page 8, line 1 * * page 13, line 5 - page 14, line 5 * ----- | 1-12 | |
| A | Ortega A, Wang H: "Mechanisms for Adapting Compressed Multimedia to Varying Bandwidth Conditions" In: van der Schaar M, Chou P A: "Multimedia over IP and Wireless Networks: Compression, Networking, and Systems" 30 March 2007 (2007-03-30), Academic Press , XP002621542 ISBN: 0120884801pages 81-116, sections 4.2.1, 4.2.2, 4.3.3.1, 4.3.3.2, 4.3.4, 4.4.4 ----- | 1-12 | TECHNICAL FIELDS SEARCHED (IPC) |

The present search report has been drawn up for all claims

| Place of search | Date of completion of the search | Examiner |
|---|---|---|
| Berlin | 10 February 2011 | Kontopodis, D |

EPO FORM 1503 03.82 (P04C01)